# EUROPEAN PATENT APPLICATION

(11) **EP 1 956 464 A1**
(43) Date of publication of application: **13.08.2008**
(21) Application number: 07015376.2
(22) Date of filing: 06.08.2007
(51) Int. Cl.: G06F 1/20, G11B 33/12, G11B 33/14

(54) **Disk array and electronic apparatus**

(30) Priority: 06.02.2007 JP 2007027129
(71) Applicant: Hitachi, Ltd., Chiyoda-ku Tokyo 100-8280 (JP)
(72) Inventor: Matsushima, Hitoshi c/o Hitachi, Ltd., Chiyoda-ku Tokyo 100-8220 (JP); Fukuda, Hiroshi c/o Hitachi, Ltd., Chiyoda-ku Tokyo 100-8220 (JP)
(74) Representative: Beetz & Partner

(57) **Abstract**

The object of the invention is to provide a disk array system and electronic apparatus capable of both excellent cooling of heat generating members and reduction of noise from the apparatus. A disk array system accommodates a plurality of disk drives 2 and has a controller 6 for controlling the disk drives 2. A refrigeration cycle system is formed with a compressor 10, a radiator 12, an expansion valve 9 and a cold plate 7. The controller 6 is cooled by the refrigeration cycle system. Two-phase refrigerant coming out from the expansion valve 9 collides with a heat receiving surface of the cold plate 7.

## Description

### BACKGROUND OF THE INVENTION

### 1. Field of the Invention

The present invention relates to a disk array system loaded with a plurality of magnetic or optical disk drives and an electronic apparatus having a heat generating device such as CPU and more particularly to a cooling structure thereof.

### 2. Description of Related Art

The disk array system includes a lot of magnetic or optical disk drives within its chassis in order to improve reliability of data storage. Such a disk array system is connected through a high speed dedicated network line such as an optical network, operated according to management software and used as a disc system of storage area network (SAN), network attached storage (NAS) or independent redundant array of inexpensive disks (RAID). The disk drive to be loaded on such a disk array system includes a disk main body including a magnetic disk, a drive motor, a magnetic head, an actuator and the like inside, a packaged board loaded with connectors for connecting electronic components for control and a canister having a handle or the like for allowing to assemble the disk main body with the packaged board and allowing the disk system to be detached easily for maintenance.

Main heat sources of the disk drive are electronic components for control such as a drive motor, an actuator and an LSI. Heat generated from these is cooled by cooling air supplied from a cooling fan provided in the disk array chassis. If the cooling performance thereof is poor, the temperature of the disk drive rises thereby causing a possibility of malfunction or lowering long-term reliability.

A controller, which controls data exchange between an external control unit and the disk drive, causes significant heat generation. Particularly, heat generation from the controller used in the NAS is large. If the cooling performance is poor, the temperature of the controller rises thereby causing a possibility of malfunction or destruction of devices.

As a conventional disk array system, there has been known a refrigeration cycle self-contained system having a cold plate in which its heat absorbing unit forms a wall face of a unit box with refrigerant inclusion inside thereof in order to improve cooling performance of such heat generating components (see, for example, Japanese Patent Application Laid-Open No.2006-73099).

However, the disk array system using the cold plate as described in Japanese Patent Application Laid-Open No.2006-73099 has such a problem that usually, it cannot secure sufficient heat transfer area because large mounting area is not available for cooling the controller on the cold plate.

On the other hand, reduction of noise generated by a fan for driving air flow within the disk array system is also a problem which should be considered. If silent can be achieved by reducing the rotation speed of the fan for example, sometimes, a sufficient air flow ratio necessary for cooling cannot be obtained.

As described above, the disk array system has two problems to be solved such as excellent cooling of the heat generating members and noise reduction of the apparatus.

An electronic apparatus having a heat generating device such as CPU also has two problems to be solved such as excellent cooling of the heat generating members and noise reduction of the apparatus.

### SUMMARY OF THE INVENTION

An object of the present invention is to provide a disk array system and an electronic apparatus capable of both excellent cooling of the heat generating members and reduction of noise from the apparatus.
(1) To achieve the above object, according to an aspect of the present invention, there is provided a disk array system accommodating a plurality of disk drives and having a controller for controlling the disk drive, comprising: a compressor; a radiator connected to the discharge side of the compressor through a pipe; an expansion valve connected to the radiator through a pipe; and a cold plate connected to downstream of the expansion valve and the intake side of the compressor, wherein a refrigeration cycle system is formed with the compressor, the radiator, the expansion valve, and the cold plate; the controller is cooled by the refrigeration cycle system; and two-phase refrigerant coming out from the expansion valve is made to collide with a heat transfer surface of the cold plate.
   With such a structure, both excellent cooling of the heat generating member and noise reduction of the apparatus can be achieved.
(2) In the above (1), preferably, the cold plate may have a micro structure provided on a heat receiving surface thereof.
(3) In the above (1), the controller may control the opening ratio of the expansion valve based on a temperature of the controller detected by the controller.
(4) In the above (1), the cold plate may be unitary structured with the expansion valve.
(5) In the above (1), preferably, the disk array system may further comprise an evaporating means which is provided between the cold plate and the compressor so as to evaporate liquid refrigerant coming out from the cold plate.
(6) In the above (5), preferably, the evaporating means may be constructed by winding the pipe, which connects the cold plate with the compressor, around the compressor allowing heat exchange.
(7) In the above (5), preferably, the evaporating means may be an evaporator disposed between the cold plate and the compressor.
(8) In the above (1), preferably, the disk array system may further comprise a thermal storage member disposed in contact with the cold plate.
(9) In the above (1), preferably, the disk array system may further comprise a second cold plate for cooling the disk drive.
(10) To achieve the above-described object, according to another aspect of the present invention, there is provided a disk array system accommodating a plurality of disk drives and having a controller for controlling the disk drive, comprising: a compressor; a radiator connected to the discharge side of the compressor through a pipe; an expansion valve connected to the radiator through a pipe; and a cold plate connected to downstream of the expansion valve and the intake side of the compressor, wherein a refrigeration cycle system is formed with the compressor, the radiator, the expansion valve, and the cold plate; the controller is cooled by the refrigeration cycle system; and the cold plate is unitary structured with the expansion valve. With such a structure, both excellent cooling of the heat generating member and noise reduction of the apparatus can be achieved.
(11) To achieve the above-described object, according to still another aspect of the present invention, there is provided a disk array system accommodating a plurality of disk drives and having a controller for controlling the disk drive, comprising: a compressor; a radiator connected to the discharge side of the compressor through a pipe; an expansion valve connected to the radiator through a pipe; and a cold plate connected to downstream of the expansion valve and the intake side of the compressor, wherein a refrigeration cycle system is formed with the compressor, the radiator, the expansion valve, and the cold plate; the controller is cooled by the refrigeration cycle system; and a pipe connecting the cold plate with the compressor exchanges heat with the compressor. With such a structure, both excellent cooling of the heat generating member and noise reduction of the apparatus can be achieved.
(12) To achieve the above-described object, according to a further aspect of the present invention, there is provided a disk array system accommodating a plurality of disk drives and having a controller for controlling the disk drive, comprising: a compressor; a radiator connected to the discharge side of the compressor through a pipe; a first expansion valve connected to the radiator through a pipe; a second expansion valve connected to the downstream of the first expansion valve through a pipe; a cold plate connected to downstream of the second expansion valve and the intake side of the compressor; and an evaporator connected in parallel to the cold plate between the downstream of the first expansion valve and the intake side of the compressor, wherein the refrigeration cycle system is formed with the compressor, the radiator, the first and second expansion valves, the cold plate and the evaporator; the controller is cooled by the cold plate of the refrigeration cycle system and heat sources other than the controller are cooled at a higher temperature than the cold plate by the evaporator of the refrigeration cycle system. With such a structure, both excellent cooling of the heat generating member and noise reduction of the apparatus can be achieved.
(13) To achieve the above-described object, according to a still further aspect of the present invention, there is provided an electronic apparatus having a CPU as a heat source, the electronic apparatus comprising: a compressor; a radiator connected to the discharge side of the compressor through a pipe; an expansion valve connected to the radiator through a pipe; and a cold plate connected to the downstream of the expansion valve and the intake side of the compressor, wherein refrigeration cycle system is formed with the compressor, the radiator, the expansion valve, and the cold plate; the CPU is cooled by the refrigeration cycle system; and two-phase refrigerant coming out from the expansion valve is made to collide with a heat transfer surface of the cold plate. With such a structure, both excellent cooling of the heat generating member and reduction of noise from the apparatus can be achieved.

As described above, the present invention enables both excellent cooling of the heat generating members and noise reduction of the apparatus to be executed.

### BRIEF DESCRIPTION OF THE DRAWINGS

FIG. 1 is a perspective view showing the entire structure of a disk array system according to a first embodiment of the present invention;
FIG. 2 is a block diagram showing the structure of refrigeration cycle of the disk array system according to the first embodiment of the present invention;
FIG. 3 is a sectional view showing the structure of an expansion valve and a cold plate for use in the disk array system according to the first embodiment of the present invention;
FIG. 4 is a perspective view showing the entire structure of the disk array system according to a second embodiment of the present invention;
FIG 5 is a block diagram showing the structure of refrigeration cycle of the disk array system according to the second embodiment of the present invention;
FIG. 6 is a perspective view showing the entire structure of the disk array system according to a third embodiment of the present invention;
FIG. 7 is a block diagram showing the structure of the refrigeration cycle of the disk array system according to the third embodiment of the present invention;
FIG 8 is a perspective view showing the entire structure of the disk array system according to a fourth embodiment of the present invention;
FIG. 9 is a perspective view showing the entire structure of the disk array system according to a fifth embodiment of the present invention;
FIG. 10 is a block diagram showing the structure of a refrigeration cycle of the disk array system according to the fifth embodiment of the present invention; and
FIG. 11 is a perspective view showing the entire structure of an electronic apparatus according to a sixth embodiment of the present invention.

### DESCRIPTION OF THE PREFERRED EMBODIMENTS

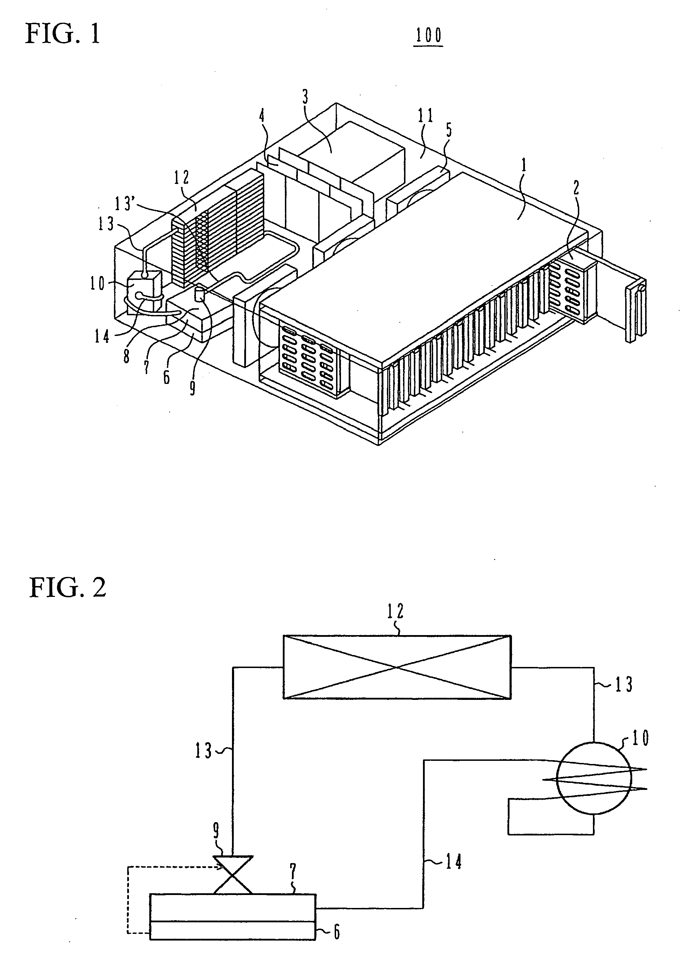

Hereinafter a structure of a disk array system according to a first embodiment of the present invention will be described with reference to FIGS. 1-3.

First, the entire structure of the disk array system of the embodiment will be described with reference to FIG. 1.

FIG. 1 is a perspective view showing the entire structure of the disk array system according to the first embodiment of the present invention.

The casing 11 of a unit chassis 100 is provided with a box 1 accommodating a plurality of disk drives 2, which is disposed in its front portion and an electric components such as a power supply unit 3, a circuit board 4 and a controller 6, which are disposed in its rear portion. A plurality of fans 5 are installed in parallel in the intermediate section between the both.

Cooling air generated by the fans 5 goes into the box 1 from outside and after cooling the respective disk drives 2, passes through the power supply unit 3, the circuit board 4 and a radiator 12 described later and then is exhausted to the rear of the unit chassis 100. The reason for this is that when the unit chassis 100 is installed on a rack, usually, wiring space of the rack is used as exhaust area for the entire rack.

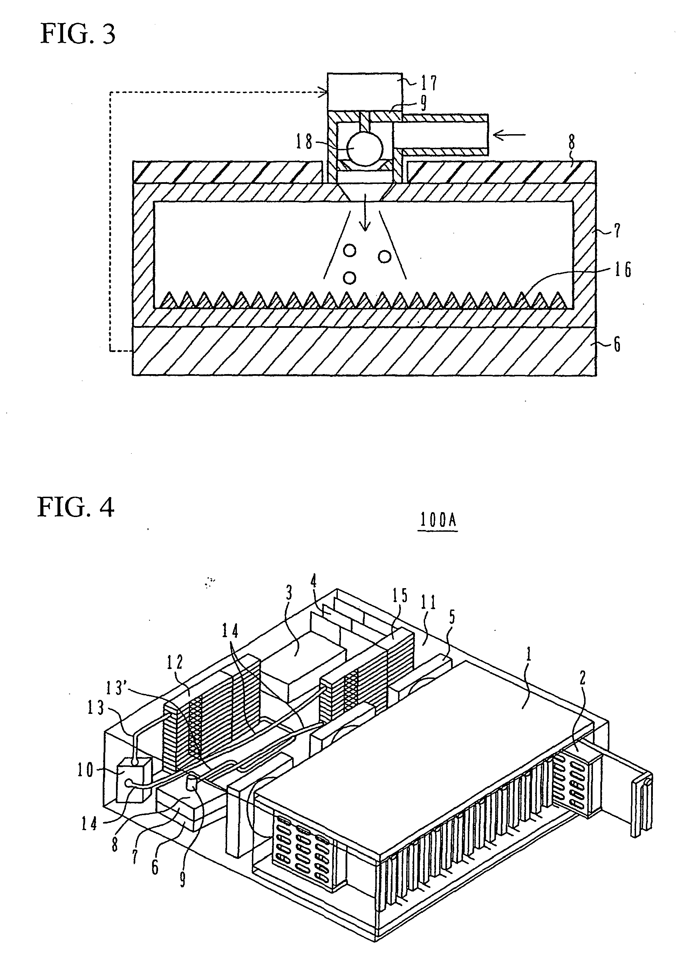

A refrigeration cycle formed with a compressor 10, the radiator 12, an expansion valve 9, a cold plate 7 and the like is disposed on the left rear portion of the unit chassis 100 to cool the controller 6. The expansion valve 9 and the radiator 12 are connected through a pipe 13. The radiator 12 and the compressor 10 are connected through a pipe 13'. The compressor 10 and the cold plate 7 are connected through a pipe 14. The refrigeration cycle is of closed loop and inside thereof is filled with chlorofluorocarbon alternative such as R134a or natural refrigerant such as carbon hydride, carbon dioxide. The cold plate 7 is thermally in contact with the controller 6 on the bottom thereof and a thermal storage member 8 on the top thereof. The expansion valve 9 and the cold plate 7 are of unitary structure as described later with reference to FIG. 3.

Next, the structure of the refrigeration cycle of the disk array system of the embodiment will be described.

FIG. 2 is a block diagram showing the structure of the refrigeration cycle of the disk array system of the first embodiment of the present invention. Here, the same reference numerals as in FIG. 1 indicate the same components.

The discharge side of the compressor 10 is connected to the radiator 12 through the high pressure pipe 13. The radiator 12 is connected to the expansion valve 9 through the high pressure pipe 13'. The cold plate 7 is provided below the expansion valve 9 and connected to the intake side of the compressor 10 through the low pressure pipe 14. The low pressure pipe 14 in the vicinity of the compressor 10 is wound around the compressor 10 so that it is thermally connected to the compressor 10 allowing heat exchange between the both.

Next, the structure of the expansion valve 9 and the cold plate 7 for use in the disk array system of the embodiment will be described with reference to FIG. 3.

FIG. 3 is a sectional view showing the structure of the expansion valve and the cold plate for use in the disk array system according to the first embodiment of the present invention. Here, the same reference numerals as in FIG. 1 indicate the same components.

The expansion valve 9 is unitary structured with the cold plate 7. The main components of the expansion valve 9 are a motor 17 and ball valve 18. A micro structure 16 is formed on the bottom inside of the cold plate 7. The micro structure 16 is, for example, protrusions in a shape of quadrangular prism, triangular prism, or trapezoid formed on the bottom inside of the cold plate 7. The micro structure 16 may be constructed as channels intersecting one another at right angle, formed on the bottom face inside of the cold plate 7. If the micro structure 16 is in a shape of quadrangular prism, the height thereof is, for example, 0.2-0.5 mm and the length of one side of the base thereof is about 0.2-0.5 mm.

The controller 6 has a function of temperature monitor. The controller 6 controls the opening ratio of the expansion valve 9 according to a monitored temperature value. The controller 6 outputs a signal for controlling the opening ratio of the valve to the motor 17 of the expansion valve 9 so as to control the opening ratio of the expansion valve 9.

Next, the operation and effect of the disk array system of the structure described with FIGS. 1-3 will be explained.

First, the expansion valve 9 and the cold plate 7 are unitary structured. Thus, refrigerant flow passing through the expansion valve 9 is accelerated in velocity quickly and drops in temperature rapidly and collides with the heat receiving face side on the bottom face of the cold plate 7 as high speed mist jet stream. Therefore, cooling efficiency can be improved comparing to a case where the expansion valve 9 and the cold plate 7 are separated apart from each other and connected through a pipe or the like.

A high heat transfer coefficient can be obtained on the heat receiving surface of the cold plate 7. Consequently, sufficient heat exchange is possible even if no large volume can be secured for the cold plate because of restriction for installation thereof. As a result, cooling performance of the controller 6 is improved extremely, so that a large load processing can be carried out. Thus, a disk array system capable of high speed processing in accordance with an increasing capacity can be provided.

Because the cooling performance of the controller 6 whose heat generation is especially large is improved, the rotation speed of the fan 5 can be reduced thereby reducing noise of the unit chassis 100.

Second, the micro structure 16 formed on the bottom surface of the cold plate 7 improves the wetness of refrigerant considerably and accelerates heat transfer by evaporation with the micro structure 16 serving as a nucleus comparing to a smooth surface. Therefore, the cooling performance can be more improved.

Third, usually, the amount of heat generation of the controller 6 fluctuates largely all the time, so that the temperature of the controller 6 itself fluctuates accompanied thereby. Thus, it is necessary to control the flow rate of refrigerant appropriately in a refrigerator self-contained system. Conventionally, a cycle control cannot follow a temperature fluctuation of the controller 6 because the time constant of the refrigerant cycle is much larger than the time constant of the controller.

Contrary to this, according to the embodiment, the time constant of the refrigeration cycle can be reduced largely because the expansion valve 9 is provided just before the cold plate 7 and the opening ratio of the valve is controlled directly by the temperature of the controller 6. Consequently, appropriate cooling cycle control can be performed following the load fluctuation of the controller 6.

Fourth, because the thermal storage member 8 is connected to the cold plate 7 in the embodiment, the time constant of the controller 6 can be increased apparently. Consequently, more appropriate refrigeration cycle control following load fluctuation of the controller 6 can be done. Thus, necessity of refrigeration cycle operation on the premise of maximum heat generation amount is eliminated, thereby achieving energy saving.

Fifth, the amount of refrigerant flowing into the cold plate 7 is controlled interlocking with load on the controller 6 in the embodiment. Even if non-evaporated surplus liquid refrigerant is generated in the cold plate 7, it exchanges heat with the compressor 10 in the downstream of the low pressure pipe 14, so that refrigerant is evaporated completely in the low pressure pipe 14. Thus, compression of liquid refrigerant in the compressor can be avoided without providing with a sub evaporator, thereby saving space in the refrigeration cycle system.

As described above, according to the embodiment, both excellent cooling of a heat generating member and reduction of noise from the system can be achieved. Therefore, cooling performance of the controller at the time of high density mounting can be improved and consequently, a large capacity, high speed disk array system can be achieved.

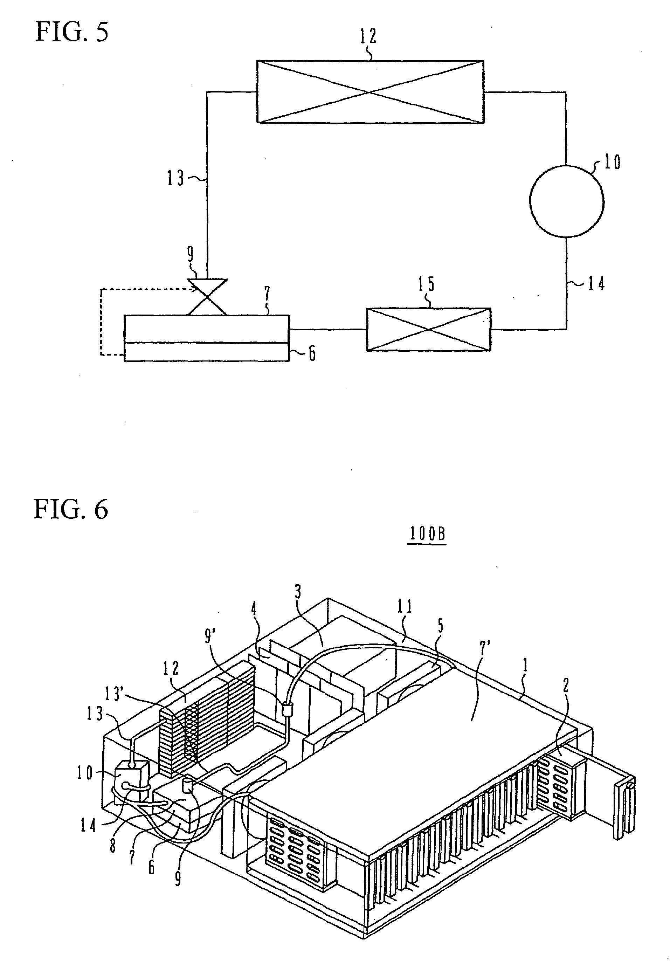

Next, the structure of the disk array system of the second embodiment of the present invention will be described with reference to FIGS. 4, 5.

First, the entire structure of the disk array system of the embodiment will be described with reference to FIG. 4.

FIG. 4 is a perspective view showing the entire structure of the disk array system of the second embodiment of the present invention. Here, the same reference numerals as in FIG. 1 indicate the same components.

The casing 11 of a unit chassis 100A is provided with a box 1 accommodating a plurality of disk drives 2, which is disposed in its front portion and an electric components such as a power supply unit 3, a circuit board 4 and a controller 6, which are disposed in its rear portion. A plurality of fans 5 are installed in parallel in the intermediate section between the both.

Cooling air generated by the fans 5 goes into the box 1 from outside and after cooling the respective disk drives 2, passes through a sub evaporator 15 described later, the power supply unit 3, the circuit board 4 and the radiator 12 also described later and then is exhausted to the rear of the unit chassis 100A. The reason for this is that when the unit chassis 100A is installed on a rack, usually, wiring space of the rack is used as exhaust area for the entire rack.

A refrigeration cycle formed with the compressor 10, the radiator 12, the expansion valve 9, the cold plate 7 and the like is disposed on the left rear portion of the unit chassis 100A to cool the controller 6. The expansion valve 9 and the radiator 12 are connected through the pipe 13. The radiator 12 and the compressor 10 are connected through the pipe 13'. The compressor 10, the sub evaporator 15 and the cold plate 7 are connected through the pipe 14. The refrigeration cycle is of closed loop and inside thereof is filled with chlorofluorocarbon alternative such as R134a, or natural refrigerant such as carbon hydride, carbon dioxide. The cold plate 7 is thermally in contact with the controller 6 on the bottom thereof. The expansion valve 9 and the cold plate 7 are of unitary structure as described later with reference to FIG. 3. The micro structure 16 is formed on the bottom surface inside of the cold plate 7 as shown in FIG. 3. In this embodiment, no thermal storage member 8 shown in FIG. 3 is employed.

Next, the structure of the refrigeration cycle of the disk array system of the embodiment will be described with reference to FIG 5.

FIG. 5 is a block diagram showing the structure of the refrigeration cycle of the disk array system of the second embodiment of the present invention. Here, the same reference numerals as in FIGS. 1, 2, 5 indicate the same components.

The discharge side of the compressor 10 is connected to the radiator 12 through the high pressure pipe 13. The radiator 12 is connected to the expansion valve 9 through the high pressure pipe 13'. The cold plate 7 is provided below the expansion valve 9 and connected to the intake side of the compressor 10 through the low pressure pipe 14. The cold plate 7 is provided below the expansion valve 9 and connected to the intake side of the sub evaporator 15 and the compressor 10 through the low pressure pipe 14.

Next, the operation and effect of the disk array system of the structure described based on FIGS. 4, 5 will be described.

First, the expansion valve 9 and the cold plate 7 are unitary structured. Thus, refrigerant flow passing through the expansion valve 9 is accelerated in velocity quickly and drops in temperature rapidly and collides with the heat receiving face side on the bottom face of the cold plate 7 as high speed mist jet stream. Therefore, cooling efficiency can be improved comparing to a case where the expansion valve 9 and the cold plate 7 are separated apart from each other and connected through a pipe or the like.

A high heat transfer coefficient can be obtained on the heat receiving surface of the cold plate 7. Consequently, sufficient heat exchange is possible even if no large volume can be secured for the cold plate because of restriction for installation thereof. As a result, cooling performance of the controller 6 is improved extremely, so that a large load processing can be carried out. Thus, a disk array system capable of high speed processing in accordance with an increasing capacity can be provided.

Because the cooling performance of the controller 6 whose heat generation is especially large is improved, the rotation speed of the fan 5 can be reduced thereby reducing noise of the unit chassis 100A.

Second, the micro structure 16 formed on the bottom surface of the cold plate 7 improves the wetness of refrigerant considerably and accelerates heat transfer by evaporation with the micro structure 16 serving as a nucleus comparing to a smooth surface. Therefore, the cooling performance can be more improved.

Third, usually, the amount of heat generation of the controller 6 fluctuates largely all the time, so that the temperature of the controller 6 itself fluctuates accompanied thereby. Thus, it is necessary to control the flow rate of refrigerant appropriately in a refrigerator self-contained system. Conventionally, a cycle control cannot follow a temperature fluctuation of the controller 6 because the time constant of the refrigerant cycle is much larger than the time constant of the controller.

Contrary to this, according to the embodiment, the time constant of the refrigeration cycle can be reduced largely because the expansion valve 9 is provided just before the cold plate 7 and the opening ratio of the valve is controlled directly by the temperature of the controller 6. Consequently, appropriate cooling cycle control can be performed following the load fluctuation of the controller 6.

Fourth, the amount of refrigerant flowing into the cold plate 7 is controlled interlocking with the load on the controller 6 in this embodiment. Surplus liquid refrigerant generated in the cold plate 7 exchanges heat with cooling air in the sub evaporator 15 and is evaporated completely. Thus, compression of liquid refrigerant in the compressor can be avoided. Cooling air cooled in the sub evaporator 15 contributes effectively to cooling of the power supply unit 3 and the circuit board 4 located in the downstream of the sub evaporator 15 within the casing 11. Thus, necessity of refrigeration cycle operation on the premise of the maximum heat generation amount is eliminated thereby achieving energy saving.

As described above, according to the embodiment, both excellent cooling of a heat generating member and reduction of noise from the system can be achieved. Therefore, cooling performance of the controller at the time of high density mounting can be improved and consequently, a large capacity, high speed disk array system can be achieved.

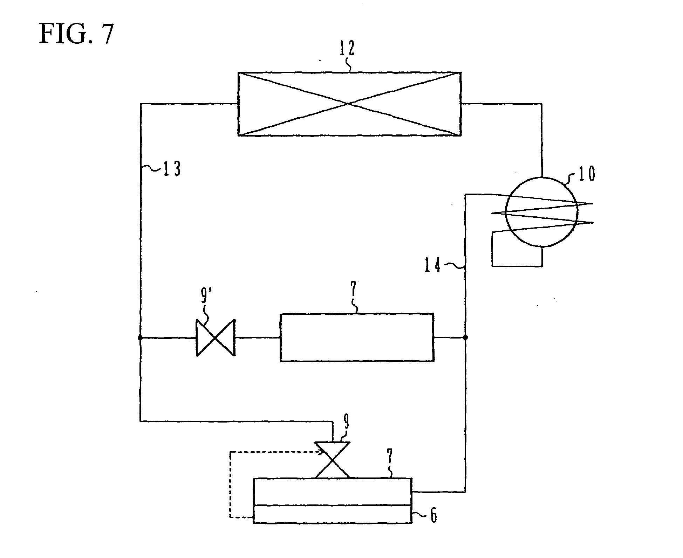

Next, the structure of the disk array system of the third embodiment of the present invention will be described with reference to FIGS. 6, 7.

First, the entire structure of the disk array system of the embodiment will be described with reference to FIG 6.

FIG. 6 is a perspective view showing the entire structure of the disk array system of the third embodiment of the present invention. Here, the same reference numerals as in FIG 1 indicate the same components.

The casing 11 of a unit chassis 100B is provided with a box 1 accommodating a plurality of disk drives 2, which is disposed in its front portion and an electric components such as a power supply unit 3, a circuit board 4 and a controller 6, which are disposed in its rear portion. A plurality of fans 5 are installed in parallel in the intermediate section between the both.

Cooling air generated by the fans 5 goes into the box 1 from outside and after cooling the respective disk drives 2, passes through the sub evaporator 15 described later, the power supply unit 3, the circuit board 4 and the radiator 12 also described later and then is exhausted to the rear of the unit chassis 100B. The reason for this is that when the unit chassis 100B is installed on a rack, usually, wiring space of the rack is used as exhaust area for the entire rack.

A refrigeration cycle formed with the compressor 10, the radiator 12, an expansion valve 9, cold plates 7, 7' and the like is disposed on the left rear portion of the unit chassis 100B to cool the controller 6. The expansion valve 9 and the radiator 12 are connected through the pipe 13. The radiator 12 and the compressor 10 are connected through the pipe 13'. The compressor 10, the sub evaporator 15 and the cold plate 7 are connected through the pipe 14. The refrigeration cycle is of closed loop and inside thereof is filled with chlorofluorocarbon alternative such as R134a or natural refrigerant such as carbon hydride, carbon dioxide. The cold plate 7 is thermally in contact with the controller 6 on the bottom thereof and the thermal storage member 8 on the top thereof.

A cold plate 7' is in contact with the top face of the disk drive 2 through heat conducting member such as rubber and resin. The cold plate 7' has an expansion valve 9' in the upstream thereof. The expansion valve 9 and the cold plates 7, 7' are of unitary structure as shown in FIG. 3. The micro structure 16 as shown in FIG. 3 is formed on the bottom surface inside of the cold plates 7, 7'.

Next, the structure of the refrigeration cycle of the disk array system of the embodiment will be described with reference to FIG. 7.

FIG. 7 is a block diagram showing the structure of the refrigeration cycle of the disk array system according to the third embodiment of the present invention. Here, the same reference numerals as in FIGS. 1-6 indicate the same components.

The discharge side of the compressor 10 is connected to the radiator 12 through the high pressure pipe 13. The radiator 12 is connected to the expansion valve 9 through the high pressure pipe 13'. The cold plate 7 is provided below the expansion valve 9 and connected to the intake side of the compressor 10 through the low pressure pipe 14. The cold plate 7 is provided below the expansion valve 9 and connected to the intake side of the compressor 10 through the low pressure pipe 14.

The cold plate 7' is in contact with the disk drive 2. The cold plate 7' has the expansion valve 9' in the upstream thereof and is connected to the radiator 12 through the high pressure pipe 13'. Therefore, according to the embodiment, cooling of each disk drive 2 which is a heat generating portion can be carried out effectively and equally.

Next, the operation and effect of the disk array system of the structure described in FIGS. 6, 7 will be described.

First, the expansion valve 9 and the cold plate 7 are unitary structured. Thus, refrigerant flow passing through the expansion valve 9 is accelerated in velocity quickly and drops in temperature rapidly and collides with the heat receiving face side on the bottom face of the cold plate 7 as high speed mist jet stream. Therefore, cooling efficiency can be improved comparing to a case where the expansion valve 9 and the cold plate 7 are separated apart from each other and connected through a pipe or the like.

A high heat transfer coefficient can be obtained on the heat receiving surface of the cold plate 7. Consequently, sufficient heat exchange is possible even if no large volume can be secured for the cold plate because of restriction for installation thereof. As a result, cooling performance of the controller 6 is improved extremely, so that a large load processing can be carried out. Thus, a disk array system capable of high speed processing in accordance with an increasing capacity can be provided.

Because the cooling performance of the controller 6 whose heat generation is especially large is improved, the rotation speed of the fan 5 can be reduced thereby reducing noise of the unit chassis 100B.

Second, the micro structure 16 formed on the bottom surface of the cold plates 7, 7' improves the wetness of refrigerant considerably and accelerates heat transfer by evaporation with the micro structure 16 serving as a nucleus comparing to a smooth surface. Therefore, the cooling performance can be more improved.

Third, usually, the amount of heat generation of the controller 6 fluctuates largely all the time, so that the temperature of the controller 6 itself fluctuates accompanied thereby. Thus, it is necessary to control the flow rate of refrigerant appropriately in a refrigerator self-contained system. Conventionally, a cycle control cannot follow a temperature fluctuation of the controller 6 because the time constant of the refrigerant cycle is much larger than the time constant of the controller.

Contrary to this, according to the embodiment, the time constant of the refrigeration cycle can be reduced largely because the expansion valve 9 is provided just before the cold plate 7 and the opening ratio of the valve is controlled directly by the temperature of the controller 6. Consequently, appropriate cooling cycle control can be performed following the load fluctuation of the controller 6.

Fourth, because the thermal storage member 8 is connected to the cold plate 7 in the embodiment, the time constant of the controller 6 can be increased apparently. Consequently, more appropriate refrigeration cycle control following load fluctuation of the controller 6 can be done. Thus, necessity of refrigeration cycle operation on the premise of maximum heat generation amount is eliminated, thereby achieving energy saving.

Fifth, the amount of refrigerant flowing into the cold plate 7 is controlled interlocking with load on the controller 6 in this embodiment. Even if non-evaporated surplus liquid refrigerant is generated in the cold plate 7, it exchanges heat with the compressor 10 in the downstream of the low pressure pipe 14, so that refrigerant is evaporated completely in the low pressure pipe 14. Thus, compression of liquid refrigerant in the compressor can be avoided without providing with the sub evaporator, thereby saving space in the refrigeration cycle system.

Sixth, because the cold plate 7' is in contact with the disk drive 2, cooling of each disk drive 2 which is a heat generating portion can be carried out and equally.

As described above, according to the embodiment, both excellent cooling of a heat generating member and reduction of noise from the system can be achieved. Therefore, cooling performance of the controller at the time of high density mounting can be improved and consequently, a large capacity, high speed disk array system can be achieved.

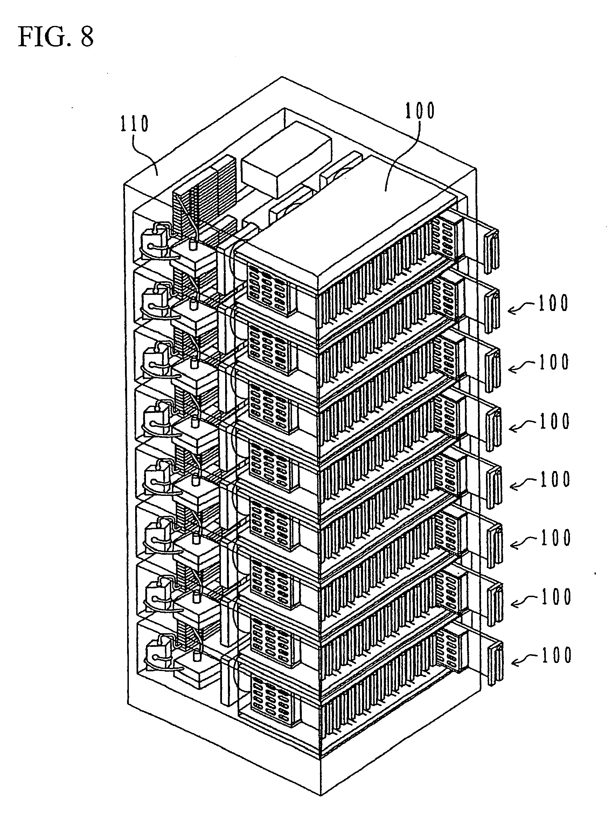

Next, the structure of the disk array system according to the fourth embodiment of the present invention will be described with reference to FIG. 8.

FIG. 8 is a perspective view showing the entire structure of the disk array according to the fourth embodiment of the present invention. Here, the same reference numerals as in FIG. 1 indicate the same components.

In this embodiment, a plurality of unit chassis 100 are installed inside a universal 19-inch rack. Here, the unit chassis 100A of FIG. 4 or the unit chassis 100B of FIG. 6 may be installed instead of the unit chassis 100.

Space on the rear side of the universal rack 100 is a wiring area. Cooling air is exhausted to the rear of the unit chassis 100. The reason for this is that when the unit chassis are installed on the universal rack 110, the wiring space of the universal rack 110 is used as an exhaust area for the entire rack.

Usually, the universal rack 110 is provided with a side wall having mesh or punching plate structure on its front face (intake side) and its rear face (exhaust side). Thus, hot air on the discharge side sometimes stays in the rack, thereby deteriorating the cooling performance comparing to a case where a single chassis is provided.

In the embodiment, the cooling is performed by the controller or the refrigeration cycle of the disk drive 2 provided inside of the unit chassis 100 and the temperature of air for cooling the power supply unit and circuit board in the downstream can be reduced. Consequently, even when the unit chassis are installed in such a rack, the disk array system can be cooled stably. This is effective for reduction of fan noise in the entire rack.

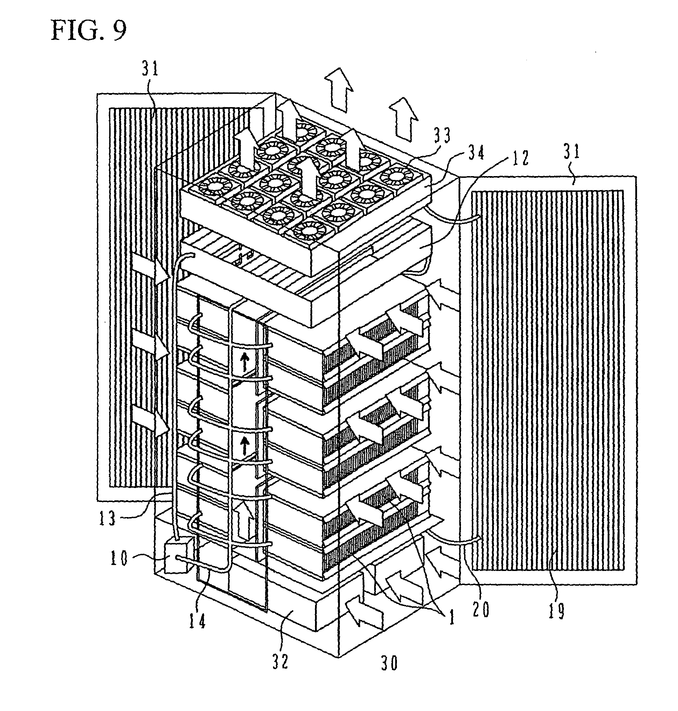

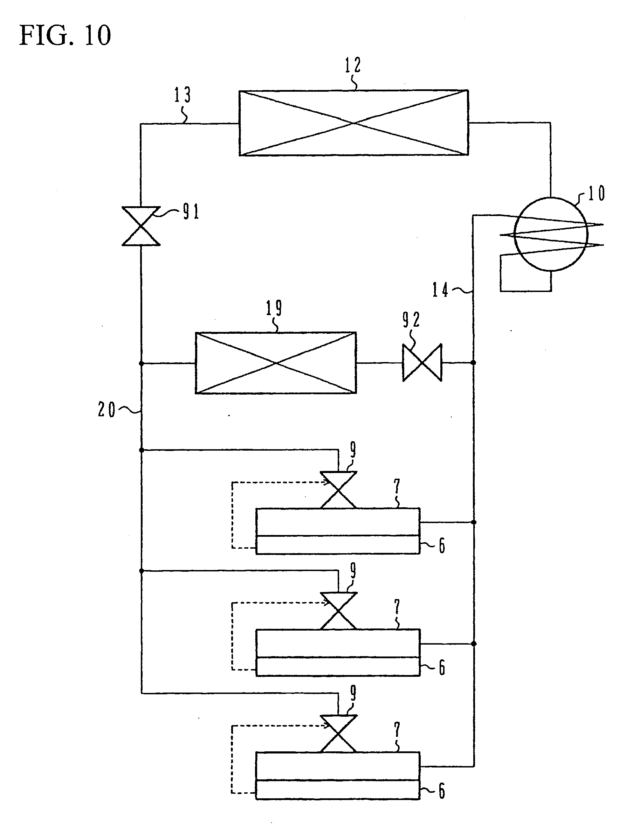

Next, the structure of the disk array system according to the fifth embodiment of the present invention will be described with reference to FIGS. 9, 10.

FIG. 9 is a perspective view showing the entire structure of the disk array system according to the fifth embodiment of the present invention. Here, the same reference numerals as in FIG. 1 indicate the same components.

In this embodiment, the boxes 1, each accommodating a plurality of disk drives, are provided inside of a chassis 30 forming multistage. In the embodiment, six stages of the boxes 1 are loaded in the vertical direction while the six stages of the boxes 1 are provided as two columns on the front and rear sides of the chassis 30, totaling 12 pieces of the boxes 1. A chassis power supply unit 32 for supplying electricity to the entire disk array system and a power input unit to be connected to a commercial power supply provided by a customer are disposed on the bottom of the chassis 30. A chassis fan unit 34 formed with a plurality of chassis fans 33 are mounted on the top of the chassis 30. Cooling air for cooling the chassis is introduced into the inside from the front and rear sides of the chassis 30 as indicated with arrows, cools the disk drives loaded inside the box 1 and then exhausted to the inside of the chassis 30. Exhausted cooling air flows upward through exhaust duct space sandwiched by the boxes 1 on the front and rear sides while merging with the discharged airs from the boxes 1 or respective stages and is sucked by the chassis fan unit 34 and finally exhausted out from the chassis 30.

In the embodiment, a door 31 is provided with an opening and an evaporator 19 is provided on this opening. A controller 6 is provided on the rear face of each box 1 although not shown and the refrigeration cycle with the cold plate 7 is used for cooling the each controller 6. In the meantime, each controller 6 and cold plate 7 are entirely wrapped with heat insulation material.

Next, the structure of the refrigeration cycle of the disk array system of the embodiment will be described with reference to FIG. 10.

FIG. 10 is a block diagram showing the structure of the refrigeration cycle of the disk array system according to the fifth embodiment of the present invention. Here, the same reference numerals as in FIG. 9 indicate the same components.

The discharge side of the compressor 10 is connected to a high pressure side expansion valve 91 through the high pressure pipe 13 and connected to the evaporator 19 and a plurality of the cold plates 7 through an intermediate pressure pipe 20. Each cold plate 7 contains the expansion valve 9. The functions of the cold plate 7 and the expansion valve 9 are the same as in the above-described embodiments. A decompression valve 92 is provided in the downstream of the evaporator 19 so as to equalize the pressure within the low pressure side pipe 14.

Next, the operation and effect of the disk array system of the structure described in FIGS. 9, 10 will be described.

First, cooling performance of the each controller 6 is extremely improved, so that a large load processing can be carried out. Thus, a disk array system capable of high speed processing in accordance with an increasing capacity can be provided. Further, the temperature of each controller 6 can be always maintained constant regardless of load condition because appropriate refrigeration cycle following a load fluctuation of each controller 6 is performed. Consequently, the necessity of the refrigeration cycle operation on the premise of the maximum heat generation amount of the controller 6 is eliminated thereby achieving energy saving. Further, even if non-evaporated surplus refrigerant is generated in the cold plate 7, it exchanges heat with the compressor 10 in the downstream of the low pressure pipe 14, so that refrigerant is evaporated completely in the low pressure pipe 14. Thus, compression of the refrigerant in the compressor can be avoided without providing with any sub evaporator, thereby saving space in the refrigeration cycle system.

Second, air flowing in is cooled by the evaporator 19 provided on the door 31 so as to lower the temperature of air introduced into the chassis 30. Consequently, the disk drive 2 which is a heat generating portion can be cooled effectively and equally. Thus, the chassis fan 33 for use in the chassis fan unit 34 located on the top of the chassis 30 may be a fan having a low rated operation speed, which produces no large noise. Consequently, noise from the entire chassis 30 can be reduced.

Third, generally it is known that a central processing device such as the controller 6 or a CPU improves its processing speed as it is cooled. When the controller cooled by the cold plate 7 is cooled using the refrigeration cycle, other components need to be cooled with air. Accordingly, if it is attempted to cool air to the same level as a setting temperature of the cold plate 7 in order to use the refrigeration capacity to a full extent, there occurs a problem that condensation is formed. However, in the embodiment, two-stage adiabatic expansion consisting of a first stage adiabatic expansion using the expansion valve 91 and a second adiabatic expansion using the expansion valve 92 is performed. Consequently, the temperature of the evaporator 19 becomes higher than the temperature of the cold plate. For the reason, if the evaporation temperature of the evaporator is set higher than a dew-point temperature, no condensation is formed on the air side. As described above, because the controller 6 and the cold plate 7 are wrapped with heat insulating material, no condensation is formed even when the cold plate 7 is cooled to a temperature below the dew point.

In this embodiment, as described above, the cooling performance of the disk drive 2 is improved by employing the above-mentioned chassis mounting system, thereby improving the cooling performance of the disk drive 2 allowing to suppress the temperature fluctuation and further to improve reliability of the disk drive 2, to elongate the service life and high density mounting. The cooling performance of the controller at the time of high density mounting can be improved so that a large capacity and high speed disk array system can be achieved. Particularly, highly reliable cooling of a high heat generating device such as the controller 6 or the disk drive 2 is enabled. Further, low noise disk array system can be realized.

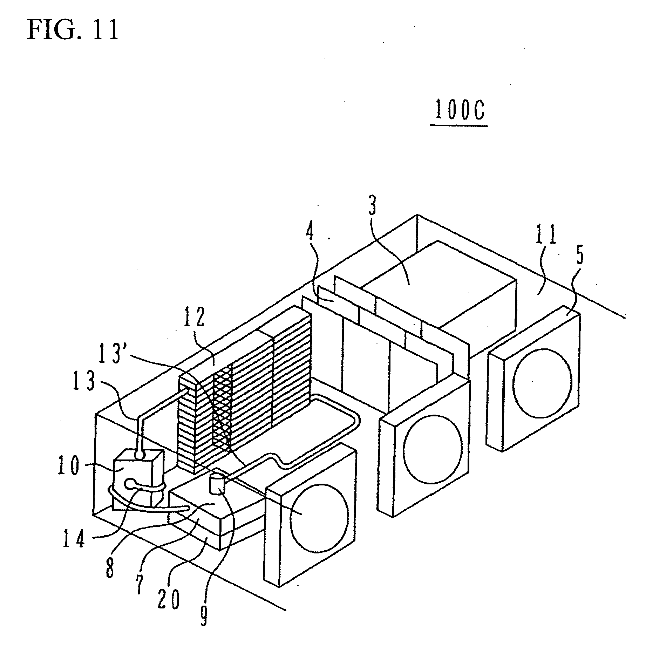

Next, the structure of an electronic apparatus according to a sixth embodiment of the present invention will be described with reference to FIG. 11.

FIG. 11 is a perspective view showing the entire structure of the electronic apparatus according to the sixth embodiment of the present invention.

The casing 11 of the unit chassis 100C includes electric components such as the power supply unit 3, the circuit board 4 and the CPU 20 which is a high heat generating device. A plurality of the fans 5 are disposed in parallel in the front portion.

Cooling air generated by the fans 5 goes into the box 1 from outside and passes through the power supply unit 3, the circuit board 4 and the radiator 12 described later and then is exhausted to the rear of the unit chassis 100C. The reason for this is that when the unit chassis 100C is installed on a rack, usually, wiring space of the rack is used as exhaust area for the entire rack.

A refrigeration cycle formed with the compressor 10, the radiator 12, an expansion valve 9, a cold plate 7 and the like is disposed on the left rear portion of the unit chassis 100C to cool the CPU 20. The expansion valve 9 and the radiator 12 are connected through the pipe 13. The radiator 12 and the compressor 10 are connected through the pipe 13'. The compressor 10 and the cold plate 7 are connected through the pipe 14. The refrigeration cycle is of closed loop and inside thereof is filled with chlorofluorocarbon alternative such as R134a or natural refrigerant such as carbon hydride, carbon dioxide. The cold plate 7 is thermally in contact with the CPU 20 on the bottom thereof and the thermal storage member 8 on the top thereof. The expansion valve 9 and the cold plate 7 are unitary structure as described later with reference to FIG 3.

The structure of the refrigeration cycle of the electronic apparatus of the embodiment is the same as shown in FIG. 2. That is, the CPU 20 is disposed instead of the controller 6 in FIG. 2.

The structure of the expansion valve 9 and the cold plate 7 for use in the electronic apparatus of the embodiment is the same as shown in FIG 3. As shown in FIG. 3, the expansion valve 9 is unitary structured with the cold plate 7. The micro structure 16 is formed on the bottom inside of the cold plate 7. The CPU 20 has a function of temperature monitor. The CPU 20 controls the opening ratio of the expansion valve 9 according to a monitored temperature value. The CPU 20 outputs a signal for controlling the opening ratio of the valve to the motor 17 of the expansion valve 9 so as to control the opening ratio of the expansion valve 9.

The electronic apparatus of the embodiment has following operation and effect.

First, the expansion valve 9 and the cold plate 7 are unitary structured. Thus, refrigerant flow passing through the expansion valve 9 is accelerated in velocity quickly and drops in temperature rapidly and collides with the heat receiving face side on the bottom face of the cold plate 7 as high speed mist jet stream. Therefore, cooling efficiency can be improved comparing to a case where the expansion valve 9 and the cold plate 7 are separated apart from each other and connected through a pipe or the like.

A high heat transfer coefficient can be obtained on the heat receiving surface of the cold plate 7. Consequently, sufficient heat exchange is possible even if no large volume can be secured for the cold plate because of restriction for installation thereof. As a result, cooling performance of the controller 6 is improved extremely, so that a large load processing can be carried out. Thus, a disk array system capable of high speed processing in accordance with an increasing capacity can be provided.

Because the cooling performance of the CPU 20 whose heat generation is especially large is improved, the rotation speed of the fan 5 can be reduced thereby reducing noise of the unit chassis 100C.

Second, the micro structure 16 formed on the bottom surface of the cold plate 7 improves the wetness of refrigerant considerably and accelerates heat transfer by evaporation with the micro structure 16 serving as a nucleus comparing to a smooth surface. Therefore, the cooling performance can be more improved.

Third, usually, the amount of heat generation of the CPU 20 fluctuates largely all the time, so that the temperature of the CPU 20 itself fluctuates accompanied thereby. Thus, it is necessary to control the flow rate of refrigerant appropriately in a refrigerator self-contained system. Conventionally, a cycle control cannot follow a temperature fluctuation of the controller 6 because the time constant of the refrigerant cycle is much larger than the time constant of the controller.

Contrary to this, according to the embodiment, the time constant of the refrigeration cycle can be reduced largely because the expansion valve 9 is provided just before the cold plate 7 and the opening ratio of the valve is controlled directly by the temperature of the CPU 20. Consequently, appropriate cooling cycle control can be performed following the load fluctuation of the CPU 20.

Fourth, because the thermal storage member 8 is connected to the cold plate 7 in the embodiment, the time constant of the CPU 20 can be increased apparently. Consequently, more appropriate refrigeration cycle control following a load fluctuation of the CPU 20 can be done. Thus, necessity of the refrigeration cycle operation on the premise of the maximum heat generation amount is eliminated, thereby achieving energy saving.

Fifth, the amount of refrigerant flowing into the cold plate 7 is controlled interlocking with load on the CPU 20 in the embodiment. Even if non-evaporated surplus liquid refrigerant is generated in the cold plate 7, it exchanges heat with the compressor 10 in the downstream of the low pressure pipe 14, so that refrigerant is evaporated completely in the low pressure pipe 14. Thus, compression of liquid refrigerant in the compressor can be avoided without providing with the sub evaporator, thereby saving space in the refrigeration cycle system.

As described above, according to the embodiment, both excellent cooling of a heat generating member and reduction of noise from the system can be achieved. Therefore, cooling performance of the CPU in case of high density mounting can be improved and consequently, a large capacity, high speed disk system can be achieved.

## Claims

1. A disk array system accommodating a plurality of disk drives and having a controller for controlling the disk drive, comprising:
a compressor;
a radiator connected to the discharge side of the compressor through a pipe; an expansion valve connected to the radiator through a pipe; and
a cold plate connected to downstream of the expansion valve and the intake side of the compressor, wherein
a refrigeration cycle system is formed with the compressor, the radiator, the expansion valve, and the cold plate;
the controller is cooled by the refrigeration cycle system; and
two-phase refrigerant coming out from the expansion valve is made to collide with a heat transfer surface of the cold plate.

2. The disk array system according to claim 1 wherein the cold plate has a micro structure provided on a heat receiving surface thereof.

3. The disk array system according to claim 1 wherein
the controller controls the opening ratio of the expansion valve based on a temperature of the controller detected by the controller.

4. The disk array system according to claim 1 wherein
the cold plate is unitary structured with the expansion valve.

5. The disk array system according to claim 1 further comprising
an evaporating means which is provided between the cold plate and the compressor so as to evaporate liquid refrigerant coming out from the cold plate.

6. The disk array system according to claim 5 wherein
the evaporating means is constructed by winding the pipe, which connects the cold plate with the compressor, around the compressor allowing heat exchange.

7. The disk array system according to claim 5 wherein
the evaporating means is an evaporator disposed between the cold plate and the compressor.

8. The disk array system according to claim 1 further comprising
a thermal storage member disposed in contact with the cold plate.

9. The disk array system according to claim 1 further comprising
a second cold plate for cooling the disk drive.

10. A disk array system accommodating a plurality of disk drives and having a controller for controlling the disk drive, comprising:
a compressor;
a radiator connected to the discharge side of the compressor through a pipe;
an expansion valve connected to the radiator through a pipe; and
a cold plate connected to downstream of the expansion valve and the intake side of the compressor, wherein
a refrigeration cycle system is formed with the compressor, the radiator, the expansion valve, and the cold plate;
the controller is cooled by the refrigeration cycle system; and
the cold plate is unitary structured with the expansion valve.

11. A disk array system accommodating a plurality of disk drives and having a controller for controlling the disk drive, comprising:
a compressor;
a radiator connected to the discharge side of the compressor through a pipe;
an expansion valve connected to the radiator through a pipe; and
a cold plate connected to downstream of the expansion valve and the intake side of the compressor, wherein
a refrigeration cycle system is formed with the compressor, the radiator, the expansion valve, and the cold plate;
the controller is cooled by the refrigeration cycle system; and
a pipe connecting the cold plate with the compressor exchanges heat with the compressor.

12. A disk array system accommodating a plurality of disk drives and having a controller for controlling the disk drive, comprising:
a compressor;
a radiator connected to the discharge side of the compressor through a pipe;
a first expansion valve connected to the radiator through a pipe;
a second expansion valve connected to the downstream of the first expansion valve through a pipe;
a cold plate connected to downstream of the second expansion valve and the intake side of the compressor; and
an evaporator connected in parallel to the cold plate between the downstream of the first expansion valve and the intake side of the compressor, wherein
the refrigeration cycle system is formed with the compressor, the radiator, the first and second expansion valves, the cold plate and the evaporator;
the controller is cooled by the cold plate of the refrigeration cycle system; and
heat sources other than the controller are cooled at a higher temperature than the cold plate by the evaporator of the refrigeration cycle system.

13. An electronic apparatus having a CPU as a heat source, the electronic apparatus comprising:
a compressor;
a radiator connected to the discharge side of the compressor through a pipe;
an expansion valve connected to the radiator through a pipe; and
a cold plate connected to the downstream of the expansion valve and the intake side of the compressor, wherein
a refrigeration cycle system is formed with the compressor, the radiator, the expansion valve, and the cold plate;
the CPU is cooled by the refrigeration cycle system; and
two-phase refrigerant coming out from the expansion valve is made to collide with a heat transfer surface of the cold plate.
